# EUROPÄISCHE PATENTSCHRIFT

(11) **EP 1 046 419 B1**
(45) Veröffentlichungstag und Bekanntmachung des Hinweises auf die Patenterteilung: **25.02.2009**
(21) Anmeldenummer: 00106511.9
(22) Anmeldetag: 25.03.2000
(51) Int. Cl.: B01D 63/02, C02F 1/44, B01D 61/18

(54) **Filtergerät zur physikalischen Elimination von Keimen, Schweb- und Feststoffen aus Wasser**
Filter apparatus for physical elimination of germs, suspended particles and solids from water
Dispositif pour l'élimination physique des germes, particules en suspension et solides de l'eau

(30) Priorität: 22.04.1999 DE 19918221
(43) Veröffentlichungstag der Anmeldung: 25.10.2000
(73) Patentinhaber: Delphin Filtertechnik GmbH, 21079 Hamburg (DE)
(72) Erfinder: Brinke-Seiferth, Stephan, 20257 Hamburg (DE); Plass, Rainer, 22301 Hamburg (DE)
(74) Vertreter: Fleck, Thomas

(56) Entgegenhaltungen:
- EP-A- 0 396 928
- US-A- 5 110 476
- PATENT ABSTRACTS OF JAPAN vol. 1997, no. 02, 28. Februar 1997 (1997-02-28) & JP 08 252436 A (MITSUBISHI RAYON CO LTD), 1. Oktober 1996 (1996-10-01)
- PATENT ABSTRACTS OF JAPAN vol. 1999, no. 11, 30. September 1999 (1999-09-30) & JP 11 156166 A (MITSUBISHI HEAVY IND LTD), 15. Juni 1999 (1999-06-15)

## Beschreibung

Die Erfindung betrifft ein Filtergerät zur physikalischen Elimination von Keimen, Schweb- und Feststoffen aus Wasser.

Ein solches Filtergerät ist aus der US 4,980,056 bekannt, das ein Gehäuse mit einem Filtereinsatz aus Hohlfasermembranen mit einer definierten Porenweite von nicht größer als 0,22 µm aufweist und an einen Wasserhahn montiert ist. Nachteilig macht sich bei dieser vorbekannten Lehre jedoch bemerkbar, dass eine Retentatablassöffnung vorgesehen ist, wodurch die Fasern, die von der Außenseite angeströmt werden, nicht definiert gespült werden, so dass bei der großen Anzahl der eingesetzten Fasern Ablagerungen in großen Mengen haften bleiben, was zu einer schnellen Verstopfung führt. Die Säuberung des Filters soll dabei durch Rückspülung erfolgen.

Das in der EP-A-0 396 928 dargestellte Gerät umfasst ein Reservoir, das mit einem Filtergerät verbunden ist. Mittels eines mechanisch zu betreibenden Kolbens wird Flüssigkeit aus dem Reservoir in den Filter gepumpt wobei durch Rückschlagventile die Strömungsführung gewährleistet wird. In der Beschreibung (Spalte 4, Zeilen 41 bis 44) heißt es: *"Contaminated water retentate remains within the cores of the hollow fibers 50 and is forced out the outlet 34 into the outlet conduit 36 and eventually into the container 12".* Das Wasser wird durch die Röhrchen der Hohlfasermembranen gepresst und letztendlich wieder in den Behälter gepumpt. Von Spülung oder Rückspülung der Membranen wird in dieser Schrift nichts erwähnt. Die Technik führt zu einer Aufkonzentration des Retentates im Behälter. Da in der EP-A-0 396 928 kein Dauerbetrieb erwähnt wird und die Anlage mechanisch (von Hand) betrieben wird, kann davon ausgegangen werden, dass das Reservoir und auch die Membran regelmäßig durch Demontage gereinigt werden müssen.

Dem Stand der Technik ist die JP-8252436 hinzuzurechnen, die ebenfalls mit einer umständlichen Rückspülung arbeitet, um die Hohlfasern zu reinigen. Auch werden hierbei mindestens zwei Dreiwege-Ventile eingesetzt, die entsprechend gesteuert werden müssen.

Im weiteren Stand der Technik sind noch auf die US 4,713,175, US 4,676,896, US 5,045,198 und DE 37 12 491 A1 hinzuweisen.

Der Erfindung liegt deshalb die Aufgabe zugrunde, ein weiteres an einen Wasserhahn anschließbares Filtergerät zur Verfügung zu stellen, um bedarfsweise eine physikalische Elimination von Keimen, Schweb- und Feststoffen aus Wasser herbeizuführen, das einen einfachen Aufbau aufweist, eine einfache Betätigung erlaubt und keine Rückspülung benötigt, um den Filter von Filtratrückständen zu reinigen.

Diese Aufgabe wird erfindungsgemäß durch die Merkmale des Anspruchs gelöst. Das einfach aufgebaute Gehäuse besitzt zwei separate Auslässe, wovon einer mittels eines Ventils bedarfsweise verschlossen werden kann. Der Hauptstrom fließt durch die Hohlfasern und tritt aus dem mit Ventil versehenen Auslaß aus. Dieser Strom ist nicht filtriert. Wird filtriertes Wasser benötigt, so wird der mit dem einzigen Ventil versehene Auslaß verschlossen. Das Wasser tritt durch die Wandungen der Hohlfasermembranen mit definierter Porengröße hindurch und fließt durch den zweiten Auslaß aus dem Gehäuse aus. Der Filter wirkt als Dead-End-Filter. Dieser Permeatstrom ist feststofffrei und weist eine um 7 Log Stufen geringere Bakterienkonzentration als der Zulauf auf. Wird kein keimreduziertes Wasser mehr benötigt, kann das Ventil wieder geöffnet werden. Durch das Öffnen ist der Dead-End-Betrieb beendet und der Filter wird automatisch durch den Hauptfluß gespült. Dadurch wird eine Rückspülung nicht nötig um die Membran zu reinigen.

Das erfindungsgemäße Filtrationsgerät kann an jeden Wasserhahn montiert werden.

Im Folgenden wird die Erfindung anhand der Zeichnungen zum besseren Verständnis erläutert:
- Fig. 1: eine schematische Darstellung des Filtereinsatzes zur Keimreduzierung;
- Fig. 2: eine schematische Darstellung des erfindungsgemäßen Gehäuses, in das der Filter eingesetzt wird und das an jeden Wasserhahn montiert werden kann.

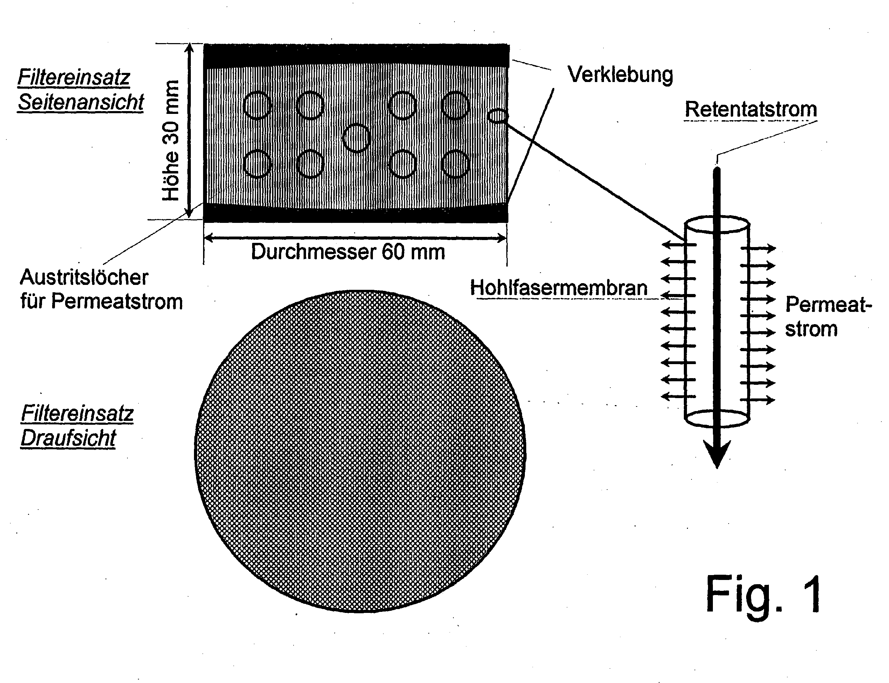

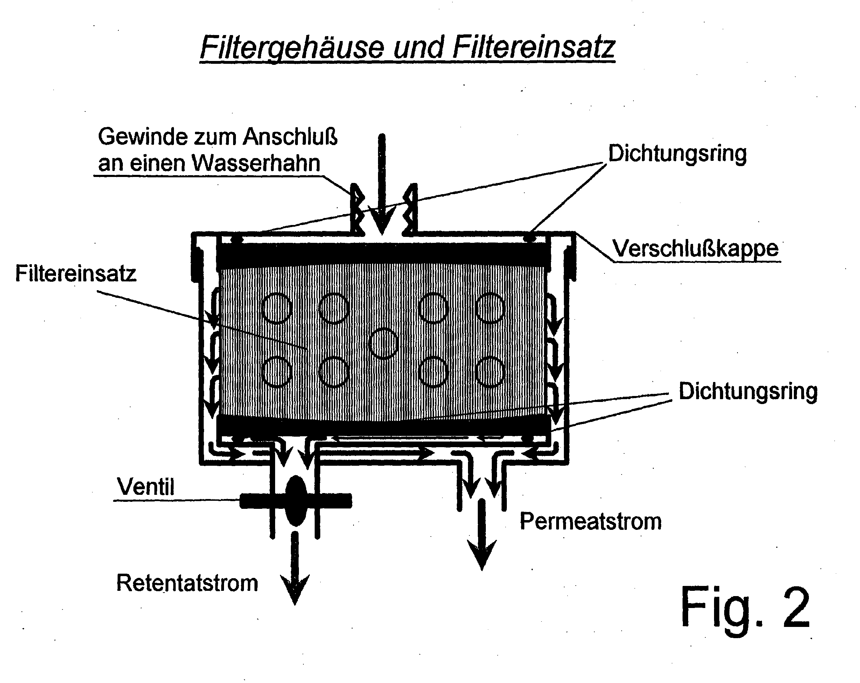

Aus Fig. 1 ist ersichtlich, daß der Filtereinsatz eine große Anzahl (in der Regel 2000 Stück bis 4000 Stück) von Hohlfasermembranen enthält, die in vertikaler Richtung durchflossen werden. Das Permeat (Filtrationsstrom) tritt durch die Wandungen der Hohlfasermembranen aus. Die Wandungen bestehen aus einer Membran mit einer definierten Porenweite, die mit einer Stützschicht eine definierte Dicke erreichen. Der Filtrationsstrom (Permeat) fließt seitlich aus den in Fig. 1 dargestellten Austrittslöchern für das Permeat aus. Der Filtereinsatz wird in ein Gehäuse gesetzt, welches an einen Wasserhahn montiert werden kann. Das Gehäuse ist so konstruiert, daß der Retentatstrom (verkeimt) sicher von dem Permeatstrom (Filtrat) getrennt wird. Das Wasser durchfließt den Filtereinsatz wie beschrieben. Der Permeatstrom wird von dem Retentatstrom getrennt. An der Unterseite des Gehäuses sind dementsprechend zwei Auslässe vorgesehen. Der in Fig. 2 dargestellte Auslaß für den Retentatstrom ist mit einem Ventil versehen, das von Hand betätigt werden kann. Somit besteht die Möglichkeit den Retentatstrom zu unterbinden und den Filter als Dead-End-Filter zu betreiben. Hierbei wird der gesamte Strom filtriert und es tritt an der Unterseite nur der gefilterte Permeatstrom aus, der eine um 7 Größenordnungen geringere Keimzahl als der direkt aus dem Wasserhahn austretende Strom aufweist. Wird das Ventil für den Retentatstrom wieder geöffnet, so kann der Hauptstrom wieder durch die Hohlfasern fließen. Dabei wird der Filter von Filtratrückständen gereinigt, die mit dem Retentatstrom abfließen.

### Beispiel

Der Filter wird an einen Wasserhahn angeschlossen. Das Leitungsnetz wird von einem Tank auf dem Dach eines Hauses aus gespeist, wie es in vielen (südlichen) Ländern üblich ist. Der Wasserstrom fließt durch die Hohlfasermembran. Beide Auslässe sind geöffnet. Der Wasserstrom entspricht in der Qualität und Keimzahl dem aus dem Leitungsnetz. Das Wasser kann zum Spülen und Waschen genutzt werden. Wird trinkbares Wasser benötigt, so kann das Handventil an der Unterseite des Gehäuses geschlossen werden. Nun wird der gesamte Wasserstrom filtriert und der dem Filtergehäuse abfließende Wasserstrom ist frei von Feststoffen und bezüglich der Keimzahl und 7 Größenordnungen reduziert. Das bedeutet, daß bei einer Keimzahl im Zufluß von 10.000.000 Keimen pro Milliliter, 1 Keim pro Milliliter im Permeat verbleibt. Es wird je nach Druck des Leitungsnetzes ein filtrierter Strom von mindestens 4 Liter pro Minute erreicht. Wird kein kreimreduziertes Wasser mehr benötigt, so kann das Ventil an der Unterseite des Filtergehäuses wieder geöffnet werden.

## Patentansprüche

1. Filtergerät zur physikalischen Elimination von Keimen, Schweb- und Feststoffen aus Wasser, das in einem Gehäuse einen Filtereinsatz aus 200-10.000 Hohlfasermembranen mit einer definierten Porenweite zwischen 0,001 und 1,0 µm aufweist, wobei der Filtereinsatz einen gelochten mit Hohlfasermembranen gefüllten Ring umfasst, die an ihren Enden jeweils an der Ober- und Unterseite des Filtereinsatzes so miteinander verklebt und mit dem Ring verbunden sind, dass nur die Öffnungen der Hohlfasermembranen als Öffnungen in den Ringflächen verbleiben, so dass das zu behandelnde Wasser vertikal durch die Hohlfasermembranen als Hauptstrom und ein Permeat durch die Hohlfaserwandungen zur Außenseite der Hohlfasern strömen kann, wobei das Gehäuse an seiner Oberseite (in vertikaler Richtung der Hohlfasern) mit einem Zulauf versehen ist, welcher an einen Wasserhahn anschließbar ist, und an seiner gegenüberliegenden Unterseite zwei separate Auslässe besitzt, einen Auslass für den Permeatstrom von den Austrittslöchern an der Außenseite der Hohlfaserwandungen und einen Auslass für den Retentatstrom von den Öffnungen der Hohlfasermembranen, wobei nur im Auslass für den Retentatstrom ein Ventil angeordnet ist, das verschließbar ist, wenn keimreduziertes Wasser benötigt wird, während der Filter im geöffneten Zustand des Ventils automatisch durch den Hauptstrom spülbar ist.

## Claims

1. Filter apparatus for the physical elimination of germs, suspended particles and solids from water and which has, in a housing, a filter element comprising 200 to 10,000 hollow fibre membranes with a defined pore width between 0.001 and 1.0 µm, the filter element comprising a perforated ring filled with hollow fibre membranes and which at their ends are so bonded together at the top and bottom surfaces of the filter element and so connected to the ring that only the openings of the hollow fibre membranes remain as openings in the ring faces, so that the water to be treated can flow vertically through the hollow fibre membranes as the main flow and a permeate can flow through the hollow fibre walls to the outside of the hollow fibres, the housing being provided on its top surface (in the vertical direction of the hollow fibres) with an intake, which is connectable to a water tap, and has on its facing bottom surface two separate outlets, one outlet for the permeate flow from the exit holes on the outside of the hollow fibre walls and one outlet for the retentate flow from the openings of the hollow fibre membranes, a valve only being provided in the outlet for the retentate flow which can be sealed if germ-reduced water is required, whilst in the opened state of the valve the filter can be automatically rinsed by the main flow.

## Revendications

1. Appareil filtrant pour l'élimination physique de germes, matières en suspension et matières solides dans l'eau, comportant dans un corps de filtre une cartouche filtrante avec de 200 à 10.000 membranes en fibres creuses ayant une grosseur de pore définie comprise entre 0,001 et 1,0 µm, où la cartouche filtrante comprend une bague perforée remplie de membranes en fibres creuses, lesquelles sont collées entre elles par leurs extrémités respectivement à la base et au sommet de la cartouche filtrante et raccordées à la bague de telle manière que seuls les orifices des membranes en fibres creuses restent comme ouvertures sur les surfaces de bague, si bien que l'eau à traiter peut s'écouler verticalement au travers des membranes en fibres creuses en tant que courant principal, et un perméat par les parois des fibres creuses vers la face extérieure des fibres creuses, où le corps de filtre est pourvu d'une admission à son sommet (dans le sens vertical des fibres creuses), laquelle peut être raccordée à un robinet d'eau, et de deux évacuations séparées sur sa base opposée, une évacuation pour le flux de perméat des trous de sortie sur la face extérieure des parois des fibres creuses et une évacuation pour le flux de rétentat des orifices des membranes en fibres creuses, où une vanne est disposée dans la seule évacuation pour le flux de rétentat, laquelle peut être fermée si de l'eau à teneur réduite en germes est nécessitée, alors que le filtre peut être automatiquement rincé par le courant principal si la vanne est en état d'ouverture.
